# EUROPÄISCHE PATENTANMELDUNG

(11) **EP 1 435 438 A1**
(43) Veröffentlichungstag der Anmeldung: **07.07.2004**
(21) Anmeldenummer: 03090448.6
(22) Anmeldetag: 19.12.2003
(51) Int. Cl.: F01N 3/08, F01N 3/20, F02B 37/12, F02C 6/12, F02D 41/30

(54) **Abgasanlage einer Verbrennungskraftmaschine ohne Vorkatalysator und Verfahren zur Behandlung eines Abgases der Verbrennungskraftmaschine**

(30) Priorität: 27.12.2002 DE 10261909; 30.01.2003 DE 10304208
(71) Anmelder: Volkswagen Aktiengesellschaft, 38436 Wolfsburg (DE)
(72) Erfinder: Ekkehard, Pott, 38518 Gifhorn (DE); Krebs, Rudolf, 38176 Wendeburg (DE); Manfred, Langer, 38518 Gifhorn (DE); Gnegel, Paul, 38165 Lehre (DE); Senft, Peter, 38104 Braunschweig (DE)
(74) Vertreter: Reinstädler, Diane

(57) **Zusammenfassung**

Die Erfindung betrifft eine Abgasanlage (10) einer direkteinspritzenden, fremdgezündeten und zumindest zeitweise magerbetriebenen Verbrennungskraftmaschine (12), die einen fahrzeuggewichtsspezifischen Hubraum von höchstens 1,2 dm³ pro 1000 kg Fahrzeugleergewicht und eine spezifische Leistung von mindestens 70 kW pro Liter Motorhubvolumen aufweist, wobei die Abgasanlage (10) als motornächsten Katalysator mindestens einen in einem Abgasstrang (22) der Verbrennungskraftmaschine (12) motornah angeordneten NO_{X}-Speicherkatalysator (24) umfasst. Erfindungsgemäß wird auf einen Vorkatalysator (26) verzichtet.

Die Erfindung betrifft weiterhin ein Verfahren zur Behandlung eines Abgases einer solchen Verbrennungskraftmaschine (12), wobei das Abgas durch mindestens einen in einem Abgasstrang (22) der Verbrennungskraftmaschine (12) als ein motornächster Katalysator angeordneten NO_{X}-Speicherkatalysator (24) geführt wird und wobei die Verbrennungskraftmaschine (12) in einem Lastbereich bis zu einem effektiven Mitteldruck (pₘₑ) von höchstens 2 bar und/oder einer Motordrehzahl (n_{Mot}) von höchstens 2000 min ⁻¹ mit einem mageren Luft-Kraftstoffgemisch mit Lambda > 1 betrieben wird.

## Beschreibung

Die Erfindung betrifft eine Abgasanlage einer direkteinspritzenden, fremdgezündeten und zumindest mager betriebenen Verbrennungskraftmaschine sowie ein Verfahren zur Behandlung eines Abgases einer solchen Verbrennungskraftmaschine.

Zur Behandlung von Abgasen fremdgezündeter Verbrennungskraftmaschinen (OttoMotoren), die aus Verbrauchsgründen zumindest zeitweise in einem mageren Betriebsmodus, das heißt mit Luftüberschuss (Lambda > 1) betrieben werden, ist bekannt, das Abgas durch nachgeschaltete NOₓ-Speicherkatalysatoren zu leiten. NOₓ-Speicherkatalysatoren lagern in mageren Betriebsphasen Stickoxide (NOₓ) in Form von Nitrat ein und werden in zwischengeschalteten Regenerationsphasen bei Lambda ≤ 1 regeneriert. NOₓ-Speicherkatalysatoren weisen neben der Speicherkomponente (üblicherweise ein Barium-Salz) auch eine katalytische Edelmetallkomponente auf, die eine Konvertierung von Schadstoffen des Abgases in umweltverträglichere Komponenten bewirkt.

NOₓ-Speicherkatalysatoren werden üblicherweise in einer motorfernen Position angeordnet, wobei Abgaslauflängen von mindestens 500 mm zwischen einem Zylinderkopf der Verbrennungskraftmaschine und dem NOₓ-Speicherkatalysator erforderlich sind, um eine ausreichende Abkühlung des Abgases zu erzielen. Dies ist zum einen wegen einer gegenüber 3-Wege-Katalysatoren eingeschränkten, thermischen Belastbarkeit der Speicherkatalysatoren erforderlich. Zudem soll eine häufige Beaufschlagung des Katalysators mit Abgastemperaturen oberhalb von 450 °C, insbesondere oberhalb von 500 °C, vermieden werden, da der Katalysator nur ein eingeschränktes Arbeitstemperaturfenster aufweist, in dem im Magerbetrieb eine NOₓ-Speicherung erfolgt. Es kommt nämlich insbesondere im gemischten Verkehr mit abwechselnden Niedriglast-Magerbetriebsphasen und Hochlast-Homogenphasen (bei Lambda = 1 ) zu hohen Speicherkatalysator-Temperaturen, die im Magerbetrieb keine effiziente NOₓ-Speicherung zulassen. Nachteilig an dieser motorfernen Anordnung des NOₓ-Speicherkatalysators ist jedoch, dass die Lightoff-Temperatur des Katalysators, ab der eine Konvertierung und Einlagerung von Schadstoffen erfolgt, verzögert wird.

Infolgedessen erschwert der resultierende Schadstoffschlupf die Erfüllung strenger Abgas-Grenzwerte. Es ist daher üblich, dem Speicherkatalysator einen kleinvolumigen 3-Wege-Katalysator vorzuschalten, der die Konvertierung bis zum Lightoff des Speicherkatalysators übernimmt. Diese Maßnahme ist jedoch mit einem erhöhten Kostenaufwand verbunden.

Auf der anderen Seite ist bei stöchiometrisch betriebenen Verbrennungskraftmaschinen (Lambda=1-Motoren) seit langem bekannt, die hier eingesetzten 3-Wege-Katalysatoren in Form eines einzigen Hauptkatalysators in motornaher Anordnung, insbesondere mit einer Abgaslauflänge hinter dem Zylinderkopf von weniger als 400 mm, einzusetzen. Bei diesen Motoren ist eine NOₓ-Speicherung nicht erforderlich, da im stöchiometrischen Abgas eine praktisch vollständige Konvertierung von Stickoxiden erfolgt. Als Folge der motornahen Anordnung des 3-Wege-Hauptkatalysators kann auf einen Vorkatalysator verzichtet werden, da die Lightoff-Temperatur des Hauptkatalysators in dieser Position auch für strenge Abgasgrenzwerte schnell genug erfolgt.

Aufgabe der vorliegenden Erfindung ist, ein Abgasreinigungskonzept, bestehend aus Abgasanlage und Abgasnachbehandlungsverfahren für kleine, leistungsstarke, magerlauffähige, fremdgezündete Verbrennungskraftmaschinen nach dem so genannten Downsizing-Konzept zur Verfügung zu stellen, das gegenüber bekannten NOₓ-Speicherkatalysatorkonzepten konstruktiv vereinfacht und kostengünstiger ist, ohne jedoch Emissionsnachteile in Kauf zu nehmen.

Diese Aufgabe wird durch eine Abgasanlage mit den Merkmalen des Anspruches 1 sowie durch ein Verfahren nach Anspruch 18 gelöst.

Die erfindungsgemäße Abgasanlage ist speziell für kleine, leistungsstarke Motoren nach dem so genannten Downsizing-Konzept, insbesondere für Kraftfahrzeuge ausgelegt. Die Abgasanlage umfasst eine direkteinspritzende, fremdgezündete und zumindest zeitweise magerbetriebene Verbrennungskraftmaschine, die einen fahrzeuggewichtsspezifischen Hubraum von höchstens 1,2 dm³ pro 1000 kg Fahrzeugleergewicht und eine spezifische Leistung von mindestens 70 kW pro Liter Motorhubvolumen aufweist. Ferner umfasst die Abgasanlage als motornächsten Katalysator mindestens einen in einem Abgasstrang der Verbrennungskraftmaschine motornah angeordneten NOₓ-Speicherkatalysator. Erfindungsgemäß wird demnach auf einen dem NOₓ-Speicherkatalysator vorgeschalteten Vorkatalysator, insbesondere auf einen 3-Wege-Vorkatalysator, verzichtet und bevorzugt ein einziger als Hauptkatalysator ausgeschalteter NOₓ-Speicherkatalysator zur Abgasnachbehandlung eingesetzt. Ausgenommen hiervon kann gegebenenfalls ein in einer Abgasrückführungsleitung angeordneter Katalysator sein. Durch die Einspritzung des Vorkatalysators wird gegenüber herkömmlichen Abgaskonzepten magerlauffähiger Verbrennungskraftmaschinen ein erheblicher Kostenvorteil erzielt.

Um die Temperaturbelastung des NOₓ-Speicherkatalysators in der motornahen Position möglichst gering zu halten, ist bevorzugt die Anordnung zumindest eines abgasenergieangetriebenen Ladeluftverdichters vorgesehen, der unter Absenkung einer Energie des den NOₓ-Speicherkatalysator anströmenden Abgases eine Verdichtung einer der Verbrennungskraftmaschine zuzuführenden Luft bewirkt, wobei eine Absenkung der Abgastemperatur eintritt. Die Erfindung macht somit Gebrauch von an sich bekannten Ladeluftverdichtern, die eine Aufladung des Motors im Wesentlichen durch Nutzung der Abgasenergie bewirken. Diese Temperaturabsenkung gestattet eine besonders motornahe Anordnung des NOₓ-Speicherkatalysators, ohne diesen thermisch zu stark zu belasten.

Erfindungsgemäß kommen jedenfalls (aber nicht ausschließlich) solche Ladeluftverdichter zum Einsatz, welche die Kompression der Ladeluft durch Nutzung von Abgasenergie bewirken. Dabei sind insbesondere Abgasturbolader geeignet, welche die Frischluftkompression über ein Verdichterrad bewirken, das durch ein seinerseits von dem Abgas angetriebenen Turbinenrad angetrieben wird. Dabei kommt es bei der hier erfolgenden Druckminderung des Abgases an der Turbine zu der gewünschten Temperaturabsenkung. Ebenfalls für die erfindungsgemäße Abgasanlage geeignet sind so genannte Comprex-Lader, bei denen Druck- und Saugwellen der pulsierenden Abgase Frischluft in direkter Berührung verdichten. Denkbar ist daneben jedoch auch die zusätzliche Verwendung anderer Ladeluftverdichter, bei denen die Verdichtung im Wesentlichen über mechanische oder elektrische Energie erfolgt.

Die konkrete Anordnung des Speicherkatalysators wird nach einer vorteilhaften Ausgestaltung der Erfindung entsprechend der durch den abgasangetriebenen Ladeluftverdichter hervorgerufenen Temperaturabsenkung realisiert, indem nämlich eine Abgaslauflänge zwischen der Verbrennungskraftmaschine und dem NOₓ-Speicherkatalysator in Abhängigkeit von der dem Abgas durch den Ladeluftverdichter entzogenen Energiemenge gewählt wird.

In üblichen NOₓ-Abgasanlagen werden NOₓ-Speicherkatalysatoren mindestens 500 mm hinter dem Zylinderkopf angeordnet. Demgegenüber befindet sich der Speicherkatalysator der erfindungsgemäßen Abgasanlage näher am Abgasaustrittsort. Insbesondere ist vorgesehen, eine Anströmfläche des NOₓ-Speicherkatalysators höchstens 400 mm, vorzugsweise höchstens 350 mm, stromab des Zylinderkopfs anzuordnen. In besonders vorteilhafter Ausgestaltung befindet sich der Katalysator höchstens 300 mm hinter dem Zylinderkopf. Im Falle der Luftverdichtung durch einen Abgasturbolader beträgt die Abgaslauflänge zwischen einer Rotationsachse des beaufschlagenden Abgasturboladers und Anströmfläche des NOₓ-Speicherkatalysators maximal 300 mm, insbesondere höchstens 250 mm, vorzugsweise höchstens 200 mm. Besonders bevorzugt sind hier Abgaslauflängen von höchstens 150 mm vorgesehen.

Die Abgaslauflänge kann umso weiter reduziert werden, je stärker die Abgastemperatur infolge der Funktion des Ladeluftverdichters abgesenkt wird. Daher kommt das erfindungsgemäße Konzept mit zunehmender Aufladung, das heißt zunehmender Verdichtung und Leistung der Verbrennungskraftmaschine als Folge der zunehmenden Entspannungsarbeit des Abgases zum Tragen. Besonders vorteilhaft sind daher Verbrennungskraftmaschinen mit einer spezifischen Leistung von mindestens 80, insbesondere mindestens 90, vorzugsweise mindestens 100 kW pro Liter Motorhubvolumen. Ganz besonders vorteilhaft günstig ist dies bei Motoraggregaten, bei denen ein fahrzeuggewichtsspezifischer Hubraum des aufgeladenen Motors höchstens 1,1, insbesondere höchstens 1,0, vorzugsweise höchstens 0,9 dm³ pro 1000 kg Fahrzeugleergewicht beträgt. Ferner werden bevorzugt Motoren eingesetzt mit Nenndrehzahlen von höchstens 7000, insbesondere höchstens 6500, vorzugsweise höchstens 6000 min⁻¹.

Trotz des nicht vorhandenen Vorkatalysators ist die Einhaltung strenger Abgasnormen durch die erfindungsgemäße Abgasanlage möglich. Insbesondere ist vorgesehen, dass die Abgasanlage derart ausgelegt ist, dass das verlassende Abgas im Neuen Europäischen Fahrzyklus NEFZ bei einem ungeschädigten NOₓ-Speicherkatalysator und einem zeitlich gefeuerten Magerbetriebsanteil mit Lambda ≥ 1,15 innerhalb einer Zeitspanne von mindestens 250 s, insbesondere mindestens 350 s, eine HC-Emission von weniger als 0,07 g/km und eine NOₓ-Emission von weniger als 0,05 g/km aufweist. Dabei wird unter einem ungeschädigten Katalysator ein frischer Katalysator verstanden, der thermisch nicht geschädigt ist und eine gespeicherte Schwefelmasse von maximal 0,02 g/l Katalysatorvolumen aufweist.

Die Erfindung kann sich ferner den eigentlich ungünstigen Umstand zunutze machen, wonach der Magerbetrieb von Motoraggregaten gemäß der vorstehenden Spezifikation einen Kraftstoffverbrauchsvorteil lediglich im unteren Lastbereich zulässt. Bei Drehzahlen n oberhalb von 0,3*n_{Nenn} und/oder bei Lasten pₘₑ oberhalb von 0,25*p_{me,max} sind allenfalls geringe Verbrauchsvorteile gegenüber dem Lambda=1-Betrieb erzielbar. In Folge der daher reduzierten Mager-Betriebszeiten sinken die Anforderungen an die NOₓ-Speicherfähigkeit des Speicherkatalysators. Ein weiterer Kostenvorteil kann somit durch Reduzierung der Speichermaterialmasse pro Speicherkatalysator gegenüber üblichen Katalysatoren erzielt werden. Besonders bevorzugt ist daher vorgesehen, NOₓ-Speicherkatalysatoren einzusetzen, die nach Einlagerung einer NO₂-Masse von 200 mg pro Liter Katalysatorvolumen einen NOₓ-Speicherwirkungsgrad von höchstens 95 %, insbesondere höchstens 90 %, vorzugsweise höchstens 80 % aufweisen. Diese relativ niedrigen Wirkungsgrade werden von heutigen NOₓ-Speicherkatalysatoren üblicherweise erst nach Einlagerung einer NO₂-Masse von 500 mg/l Katalysatorvolumen erreicht. Demgegenüber weist der erfindungsgemäß ausgelegte Speicherkatalysator bei einer eingelagerten NO₂-Masse von 500 mg/l Katalysatorvolumen einen NOₓ-Speicherwirkungsgrad von höchstens 80 %, vorzugsweise von höchstens 70 % auf, mindestens aber von 60 %. Im Ergebnis bedeutet dies, dass die Speichermaterialmasse des erfindungsgemäßen Katalysators gegenüber herkömmlichen Konzepten um mindestens 30 %, insbesondere um mindestens 50 %, vorzugsweise sogar um mindestens 70 % reduziert werden kann. Hieraus ergeben sich weitere Kosten- und Gewichtsvorteile. (Alle vorstehend angegebenen Wirkungsgrade beziehen sich auf eine Speicherleistung, die unmittelbar nach einer Regenerationsphase an einem NOₓ-Speicherkatalysator im Frischzustand (ungebraucht, aber konditioniert) bei Beaufschlagung mit einem Abgas mit einer HC-Eingangskonzentration von maximal 100 ppm HC₃ und einer NOₓ-Eingangskonzentration von 250-500 ppm bei einer mittleren Katalysatortemperatur von 350 ±20 °C, Lambda = 2,2 ±0,2 und einer Raumgeschwindigkeit von 40.000 ±20.000 h⁻¹ gemessen wurden. Siehe näher hierzu das Ausführungsbeispiel unten.)

Eine weitere Reduzierung der Abgaslauflänge, das heißt eine noch motornähere Anordnung des NOₓ-Speicherkatalysators, kann durch Verwendung von hochtemperaturfähigen Hauptspeicherkomponenten des NOₓ-Speicherkatalysators erzielt werden. Dafür eignen sich insbesondere Barium, Kalium, Caesium, Natrium und/oder Magnesium, insbesondere Verbindungen und/oder Salze, vorzugsweise Carbonate von diesen, wobei Formulierungen auf Basis von Kalium, Caesium, Natrium und/oder Magnesium bevorzugt sind. Gegenüber heutigen Speicherkatalysatoren, die auf Barium-Basis arbeiten und ein Arbeitstemperaturfenster der NOₓ-Speicherung im Magerbetrieb von 250 °C bis maximal 500 °C aufweisen, wird erfindungsgemäß ein Katalysator eingesetzt, dessen NOₓ-Speichertemperaturfenster nach oben hin erweitert ist. Er weist eine obere Grenze des Temperaturfensters von mindestens 550 °C, insbesondere mindestens 580 °C, vorzugsweise mindestens 610 °C, besonders bevorzugt mindestens 640 °C auf. Eine solche Formulierung kommt besonders vorteilhaft bei Motoraggregaten mit den vorstehend beschriebenen spezifischen Leistungen und Hubräumen zum Tragen, wobei die oben angegebenen Abgasgrenzwerte im Neuen Europäischen Fahrzyklus eingehalten werden. Besonders vorteilhaft kann die Hochtemperaturformulierung auch in Zusammenhang mit der reduzierten Speichermaterialmasse eingesetzt werden.

Es ist ferner vorteilhaft möglich, einen Edelmetallgehalt des NOₓ-Speicherkatalysators gegenüber heute üblichen Katalysatoren abzusenken. Insbesondere werden gemäß der vorliegenden Erfindung Katalysatoren mit einem Edelmetallgehalt von höchstens 3,59 g/dm³ (100 g/ft³), vorzugsweise von höchstens 2,87 g/dm³ (80 g/ft³) eingesetzt. Demgegenüber stehen heute übliche Speicherkatalysatoren mit Edelmetallgehalten von mindestens 3,95 g/dm³ (110 g/ft³), häufiger sogar mit mindestens 4,67 g/dm³ (130 g/ft³). Eine solche Edelmetallreduzierung führt zu einem weiteren Kostenvorteil, ohne dass signifikante Einbußen der Schadstoffkonvertierung beobachtet werden.

Entsprechend dem erfindungsgemäßen Verfahren wird die Verbrennungskraftmaschine der oben beschriebenen Spezifikation in einem Lastbereich bis zu einem effektiven Mitteldruck (pₘₑ) von höchstens 2, insbesondere höchstens 1,5, vorzugsweise höchstens 1,2 bar und/oder einer Motordrehzahl (n_{Mot}) von höchstens 2000, insbesondere höchstens 1600, vorzugsweise höchstens 1200 min⁻¹ mit einem mageren Luft-Kraftstoffgemisch betrieben, das heißt mit Luftüberschuss (Lambda > 1). Nach einer vorteilhaften Ausgestaltung des Verfahrens wird der Magerbetrieb auf einen Lastbereich maximal bis zu einem effektiven Mitteldruck (pₘₑ) des 0,25-Fachen eines maximalen Mitteldrucks (p_{me,max}), und/oder bis zu einer Motordrehzahl (n_{Mot}) des 0,3-Fachen einer Nenndrehzahl (n_{Nenn}) beschränkt. Bei diesen Mager-Betriebsfenstern kann die Abgasnachbehandlung besonders vorteilhaft mit NOₓ-Speicherkatalysatoren durchgeführt werden, die ― wie vorstehend beschrieben ― eine reduzierte NOₓ-Speichermaterialmasse aufweisen

Weitere vorteilhafte Ausgestaltungen der Erfindung sind Gegenstand der übrigen Unteransprüche.

Die Erfindung wird nachfolgend in Ausführungsbeispielen anhand der zugehörigen Zeichnungen näher erläutert. Es zeigen:
- Figur 1: eine Abgasanlage gemäß dem Stand der Technik und
- Figur 2: eine erfindungsgemäße Abgasanlage.

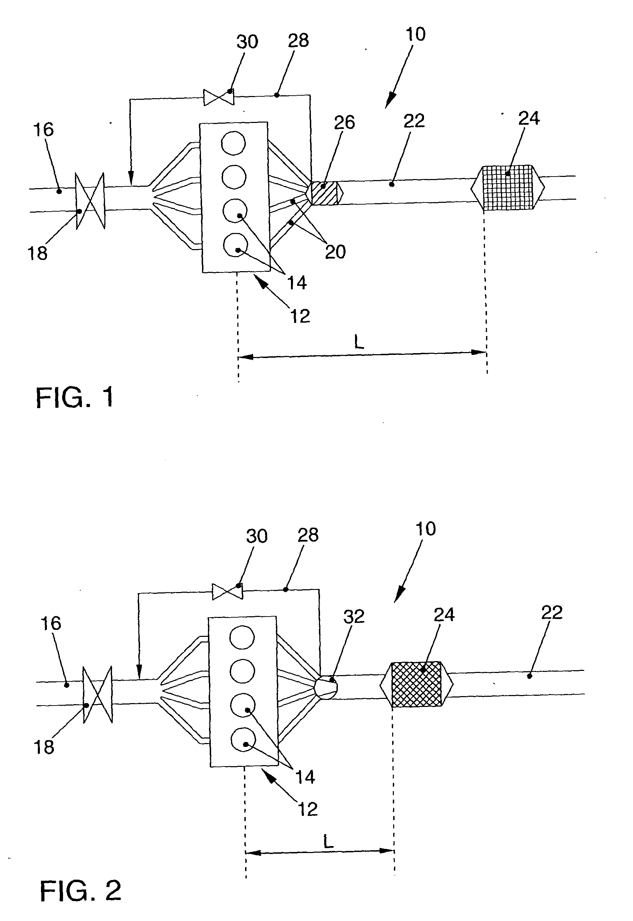

Figur 1 zeigt in schematischer Weise eine insgesamt mit 10 bezeichnete Abgasanlage, wie sie gemäß dem Stand der Technik für fremdgezündete, magerlauffähige Verbrennungskraftmaschinen 12 üblich ist. Die Verbrennungskraftmaschine 12 weist gemäß dem dargestellten Beispiel vier Zylinder 14 auf, die jeweils über ein gemeinsames Luftansaugrohr 16 mit Frischluft und damit mit Sauerstoff versorgt werden. Eine Regulation der Frischluftmenge erfolgt über eine in dem Luftansaugrohr 16 angeordnete, stellbare Drosselklappe 18.

Die Verbrennungskraftmaschine 12 ist außerdem noch mit einer hier nicht dargestellten Kraftstoffdirekteinspritzung ausgestattet. Diese sowie eine speziell ausgestaltete Brennraumgeometrie der Zylinder 14 ermöglicht, die Verbrennungskraftmaschine 12 jedenfalls im unteren und mittleren Lastbereich in einem so genannten Schichtlademodus zu betreiben, bei dem lediglich im Bereich einer Zündkerze eines Zylinders 14 eine zündfähige Gemischwolke dargestellt wird. Der Schichtladebetrieb ermöglicht einen besonders mageren und damit kraftstoffsparenden Betrieb der Verbrennungskraftmaschine 12.

Abgase, die die Zylinder 14 der Verbrennungskraftmaschine 12 über einen nicht dargestellten Zylinderkopf verlassen, werden über Krümmerrohre 20 in einen gemeinsamen Abgasstrang 22 geleitet.

Eine Abgasnachbehandlung erfolgt mit Hilfe des in dem Abgasstrang 22 angeordneten Katalysatorsystems 24 und 26. Dieses umfasst als Hauptkatalysator einen großvolumigen NOₓ-Speicherkatalysator 24. Der NOₓ-Speicherkatalysator 24 hat aufgrund seiner Edelmetallkomponenten eine katalytische Funktion zur Konvertierung von im Abgas enthaltenen Schadstoffen wie Kohlenmonoxid, unverbrannten Kohlenwasserstoffen und Stickoxiden. Er weist darüber hinaus auch eine NOₓ-Speicherfunktion im Magerbetrieb der Verbrennungskraftmaschine 12 auf. Hierdurch werden im Magerbetrieb nicht vollständig konvertierbare Stickoxide üblicherweise an einer Barium-Speicherkomponente in Form von Nitrat gespeichert und in zwischengeschalteten kurzen Regenerationsphasen (bei Lambda ≤ 1) desorbiert und konvertiert.

Aufgrund seiner gegenüber 3-Wege-Katalysatoren erhöhten Temperaturempfindlichkeit sowie aufgrund eines begrenzten Temperaturfensters, in dem die Mager-NOₓ-Speicherung erfolgen kann, befindet sich der NOₓ-Speicherkatalysator 24 gemäß herkömmlicher Systeme an einer motorfernen Position im Abgasstrang 22, so dass über die Abgaslauflänge L, die üblicherweise mindestens 500 mm nach Zylinderkopf beträgt, eine ausreichende Abkühlung des Abgases stattfindet. Die motorferne Anordnung des NOₓ-Speicherkatalysators 24 hat jedoch den Nachteil, dass er seine Mindest-Betriebstemperatur, den so genannten Lightoff, nach einem Motorkaltstart erst verzögert erreicht. Um einen hierdurch erzeugten Schadstoffschlupf zu minimieren, ist gemäß dem Stand der Technik üblich, einen kleinvolumigen Vorkatalysator 26, der in der Regel als 3-Wege-Katalysator ausgestaltet ist, an einer motornahen Position dem NOₓ-Speicherkatalysator 24 vorzuschalten. Die Anordnung solcher Vorkatalysatoren 26 ist aber mit einem zusätzlichen Kostenaufwand verbunden.

Die Abgasanlage 10 umfasst ferner eine Abgasrückführungsleitung 28, mit der Abgase in das Luftansaugrohr 16 zurückgeführt und der Verbrennungskraftmaschine 12 erneut zugeführt werden. Eine Abgasrückführrate ist über ein Abgasrückführungsventil 30 einstellbar.

Figur 2 stellt ebenfalls stark vereinfacht eine Abgasanlage 10 gemäß einer bevorzugten Ausgestaltung der vorliegenden Erfindung dar. In Figur 2 werden gleiche Elemente mit den gleichen Bezugszeichen wie in Figur 1 bezeichnet.

Bei der vorliegenden fremdgezündeten, magerlauffähigen Verbrennungskraftmaschine 12 mit Kraftstoffdirekteinspritzung handelt es sich um ein leistungsstarkes Aggregat mit kleinem Hubraum. Insbesondere weist die Verbrennungskraftmaschine 12 einen fahrzeuggewichtsspezifischen Hubraum von höchstens 1,2 dm³/1000 kg Fahrzeugleergewicht und eine spezifische Leistung von mindestens 70 kW/l Motorhubvolumen auf. Besonderes vorteilhaft kann der Hubraum auf etwa 0,9 dm³/1000 kg Fahrzeugleergewicht reduziert und die Leistung auf etwa 100 kW/I Motorhubvolumen angehoben werden.

Die erfindungsgemäße Abgasanlage 10 zeichnet sich durch die Abwesenheit eines Vorkatalysators sowie durch eine motornahe Anordnung des NOₓ-Speicherkatalysators 24 aus. Diese gegenüber dem Stand der Technik kostengünstige Konstellation wird ermöglicht, indem von der Funktionsweise an sich üblicher Luftladeverdichter in vorteilhafter Weise Gebrauch gemacht wird. Dabei kommen zumindest, aber nicht ausschließlich solche Luftladeverdichter zum Einsatz, die eine für die Luftverdichtung benötigte Energie dem Abgas entziehen, wobei eine Abgasenergie gesenkt und die Abgastemperatur reduziert wird. In Figur 2 ist beispielhaft ein Abgasturbolader 32 angedeutet. Abgasturbolader bestehen im Wesentlichen aus einem mit dem Abgas in Kontakt stehenden Turbinenrad, das über eine Welle mit einem Verdichterrad gekoppelt ist. Somit erfolgt die Luftverdichtung unter Ausnutzung der Energie des Abgases, welches das Turbinenrad antreibt. Eine am Turbinenrad stattfindende Entspannungsarbeit des Abgases sorgt für seine Abkühlung und gestattet die motornahe Anordnung des NOₓ-Speicherkatalysators.

Die konkrete Position des NOₓ-Speicherkatalysators im Abgasstrang 22 ist in Abhängigkeit von der dem Abgas durch den Abgasturbolader 32 entzogenen Energiemenge, das heißt dem Grad der Abgasauskühlung, gewählt. Dabei beträgt die Abgaslauflänge L zwischen der hier nicht dargestellten Rotationsachse des Abgasturboladers 32 und einer Anströmfläche (Stirnfläche) des NOₓ-Speicherkatalysators 24 vorzugsweise höchstens 200 mm, in besonders vorteilhafter Ausgestaltung sogar höchstens 150 mm.

Die motornahe Anordnung des NOₓ-Speicherkatalysators 24 wird ferner durch eine gegenüber dem Stand der Technik abgewandelte Katalysatorauslegung und Formulierung der Basischemie ermöglicht. Insbesondere wird der Umstand der genannten besonderen Spezifikationen des Motoraggregates genutzt, wonach der Magerbetrieb, und ganz besonders der Schichtladebetrieb auf den untersten Teillastenbereich begrenzt ist. Insbesondere wird die Verbrennungskraftmaschine 12 nur in einem Lastbereich bis zu einer Motordrehzahl von höchstens 2000 min⁻¹ beziehungsweise n = 0,3*n_{Nenn} und bis zu einem effektiven Mitteldruck von höchstens 2 bar beziehungsweise pₘₑ = 0,25*p_{me,max} im Magerbetrieb, insbesondere im mageren Schichtladebetrieb gefahren.

Aufgrund des begrenzten Magerbetriebs sind die NOₓ-Rohemissionen der Verbrennungskraftmaschine 12 geringer als in herkömmlichen Konzepten, so dass die Anforderung an die NOₓ-Speicherfähigkeit des NOₓ-Speicherkatalysators 24 gesenkt sind. Aus diesem Grund kann eine Speichermaterialmasse des Speicherkatalysators 24 um mehr als 50 % gegenüber üblichen Formulierungen reduziert werden. Im bevorzugten Beispiel ist sie sogar um mehr als 70 % reduziert. Der bevorzugt verwendete NOₓ-Speicherkatalysator 24 weist nach Einlagerung einer NO₂-Masse von 200 mg/l Katalysatorvolumen einen NOₓ-Speicherwirkungsgrad von nur noch höchstens 95 % und nach Einlagerung von 500 mg/l Katalysatorvolumen nur von noch höchstens 80 % auf, ohne zu unvertretbar hohen NOₓ-Emissionen zu führen (siehe unten).

Der hier verwendete Speicherkatalysator 24 weist darüber hinaus einen gegenüber dem Stand der Technik reduzierten Edelmetallgehalt von maximal 2,87 g/dm³ (80 g/ft³) auf.

Ferner ist der Speicherkatalysator 24 mit einer hochtemperaturfähigen Basischemie ausgestattet. Dafür wird als Hauptspeicherkomponente vorzugsweise nicht Barium, sondern Salze des Kalium, Caesium, Natrium und/oder Magnesium verwendet.

### HC- und NOₓ-Emission

Die Endemissionen des erfindungsgemäßen NOₓ-Speicherkatalysators 24 lagen im Neuen Europäischen Fahrzyklus NEFZ im thermisch ungeschädigten Zustand und mit einer gespeicherten Schwefelmasse von maximal 0,2 g/l Katalysatorvolumen bei einem zeitlich gefeuerten Magerbetriebsanteil (ohne Schubphasen) mit Lambda > 1,15 von zumindest 250 s, insbesondere sogar mindestens 350 s, unterhalb von 0,07 g/km für unverbrannte Kohlenwasserstoffe (HC) und unterhalb von 0,05 g/km für Stickoxide (NOₓ).

Nach einer Ofenalterung des erfindungsgemäßen NOₓ-Speicherkatalysators 24 für vier Stunden bei 1.100 °C in einer Atmosphäre mit 2 % O₂ und 10 % H₂O in demselben Fahrzeug im NEFZ wies dieser eine HC-Emission unterhalb von 0,1 g/km und eine NOₓ-Emission unterhalb von 0,08 g/km auf.

### Ermittlung des NOₓ- Speichertemperaturfensters

Die besondere Auslegung des Speicherkatalysators 24 gemäß der vorliegenden Erfindung erlaubt eine Erweiterung des NOₓ-Speichertemperaturfensters im Magerbetrieb gegenüber heutigen Konzepten. Es ist daher vorgesehen, den Magerbetrieb, insbesondere den Schichtladebetrieb der Verbrennungskraftmaschine 12 bis zu Katalysatortemperaturen oberhalb von 600 °C, insbesondere oberhalb von 610 °C oder sogar 640 °C auszudehnen. Die untere Temperaturgrenze liegt dabei optimalerweise auf dem bisherigen Niveau von etwa 250 °C, kann jedoch aufgrund der anderen vorherrschenden Temperaturverhältnisse um 20 K, gegebenenfalls sogar um 50 K oder sogar um 70 K angehoben werden.

Das genaue NOₓ-Speichertemperaturfenster eines konkreten NOₓ-Speicherkatalysators 24 im Magerbetrieb muss für jede Katalysatorformulierung im Einzelnen ermittelt werden. Die Ermittlung erfolgt in einem alternierenden Mager-Fett-Betrieb, wobei der erfindungsgemäße Katalysator und ein beliebiger Katalysator des Standes der Technik an einem beliebigen schichtladefähigen, direkteinspritzenden Otto-Motor ebenfalls nach dem Stand der Technik betrieben werden.

Beide ungebrauchte Katalysatoren werden zunächst konditioniert, indem über vier Stunden bei einer mittleren Katalysatortemperatur von 650 ±30 °C eine Gasbeaufschlagung mit Lambda = 1 ±0,03, mit einem Sauerstoffanteil unterhalb von 1,5 % und bei einer Raumgeschwindigkeit von 20.000 ±5.000 h⁻¹ erfolgt. In diesem Zustand (= Frischzustand) werden beide Katalysatoren unmittelbar nach einer Regenerationsphase von mindestens 60 s bei Lambda > 0,9 bei einer Raumgeschwindigkeit von 40.000 ±20.000 h⁻¹ bei Lambda = 2,2 ±0,2 mit einer HC-Eingangskonzentration < 100 ppm HC₃ und einer NOₓ-Eingangskonzentration von 250 bis 500 ppm beaufschlagt.

Die Ermittlung der Abweichung des Temperaturfensters des erfindungsgemäßen Katalysators vom Katalysator gemäß dem Stand der Technik erfolgt derart, dass zunächst die Mindest- und Maximaltemperaturen ermittelt werden, bei denen der Katalysator gemäß dem Stand der Technik nach Einlagerung einer vorgegebenen NO₂-Masse von zum Beispiel 500 mg/l Katalysatorvolumen einen vorgegebenen NOₓ-Speicherwirkungsgrad von beispielsweise 75 % aufweist. Anschließend werden für den erfindungsgemäßen Speicherkatalysator diejenigen Temperaturen ermittelt, bei denen nach Einlagerung derselben NO₂-Masse derselbe Speicherwirkungsgrad vorliegt. Diese Temperaturen werden dann als Mindest- und Maximaltemperaturen des NOₓ-Speichertemperaturfensters für den Betrieb des erfindungsgemäßen NOₓ-Speicherkatalysators verwendet.

### Messung des NOₓ-Speicherwirkungsgrades

Der NOₓ-Speicherwirkungsgrad im mageren Abgas erfindungsgemäß speicherreduzierter NOₓ-Speicherkatalysatoren und eines herkömmlichen NOₓ-Speicherkatalysators wurden wie folgt ermittelt. Die Speichermaterialmassen der getesteten Katalysatoren waren gegenüber den Speichermaterialmasse des herkömmlichen NOₓ-Speicherkatalysators um etwa 30 %, 50 % beziehungsweise 70 % reduziert.

Zunächst wurden alle ungebrauchte Katalysatoren konditioniert, indem über vier Stunden bei einer mittleren Katalysatortemperatur von 650 ±30 °C eine Abgasbeaufschlagung bei Lambda = 1 ±0,03, mit einem Sauerstoffanteil unterhalb von 1,5 % O₂ im zuströmenden Abgas und bei einer Raumgeschwindigkeit von 20.000 ±5.000 h⁻¹ erfolgte. Anschließend wurde eine Regenerationsphase von mindestens 60 s bei Lambda < 0,9 durchgeführt.

Unmittelbar nach dieser Regenerationsphase erfolgte eine Beaufschlagung der NOₓ-Speicherkatalysatoren mit einem Abgas mit einer HC-Eingangskonzentration von maximal 100 ppm HC₃ und einer NOₓ-Eingangskonzentration von 250-500 ppm bei einer mittleren Katalysatortemperatur von 350 ±20 °C, Lambda = 2,2 ±0,2 und einer Raumgeschwindigkeit von 40.000 ±20.000 h⁻¹.

Nach Einlagerung einer NO₂-Masse von 200 mg pro Liter Katalysatorvolumen wiesen die speicherreduzierten Katalysatoren noch einen NOₓ-Speicherwirkungsgrad von mindestens 95 % (Katalysator mit um 30 % reduzierter Speichermaterialmasse), mindestens 90 % (50 % Speichermaterialmasse) beziehungsweise mindestens 80 % (um 70 % reduzierte Speichermaterialmasse) auf. Nach Einlagerung einer NO₂-Masse von 500 mg/l Katalysatorvolumen wiesen die speicherreduzierten Katalysatoren einen NOₓ-Speicherwirkungsgrad unterhalb von 80 % (Katalysator mit um 30 % reduzierter Speichermaterialmasse) beziehungsweise unterhalb von 70 % (50 % Speichermaterialmasse) auf. Alle speicherreduzierten Katalysatoren wiesen bei dieser Speicherfüllung aber noch einen Wirkungsgrad von mindestens 60 % auf. Im Vergleich hierzu hatte der NOₓ-Speicherkatalysator gemäß Stand der Technik bei einer eingelagerten NOₓ-Masse von 500 mg/l Katalysatorvolumen einen Speicherwirkungsgrad oberhalb von 95%.

### BEZUGSZEICHENLISTE

- 10: Abgasanlage
- 12: Verbrennungskraftmaschine
- 14: Zylinder
- 16: Luftansaugrohr
- 18: Drosselklappe
- 20: Krümmerrohre
- 22: Abgasstrang
- 24: NOₓ-Speicherkatalysator
- 26: Vorkatalysator
- 28: Abgasrückführungsleitung
- 30: Abgasrückführungsventil
- 32: Luftladeverdichter

- L: Abgaslauflänge

## Patentansprüche

1. Abgasanlage (10) einer direkteinspritzenden, fremdgezündeten und zumindest zeitweise magerbetriebenen Verbrennungskraftmaschine (12), die einen fahrzeuggewichtsspezifischen Hubraum von höchstens 1,2 dm³ pro 1000 kg Fahrzeugleergewicht und eine spezifische Leistung von mindestens 70 kW pro Liter Motorhubvolumen aufweist, wobei die Abgasanlage (10) als motornächsten Katalysator mindestens einen in einem Abgasstrang (22) der Verbrennungskraftmaschine (12) motornah angeordneten NOₓ-Speicherkatalysator (24) umfasst.

2. Abgasanlage (10) nach Anspruch 1, **dadurch gekennzeichnet, dass** zwischen einem Abgasaustritt der Verbrennungskraftmaschine (12) und dem motornächsten NOₓ-Speicherkatalysator (24) kein weiterer Katalysator, insbesondere kein 3-Wege-Vorkatalysator (26), angeordnet ist.

3. Abgasanlage (10) nach einem der vorhergehenden Ansprüche, **dadurch gekennzeichnet, dass** ein die Abgasanlage (10) verlassendes Abgas im Neuen Europäischen Fahrzyklus (NEFZ) bei einem ungeschädigten NOₓ-Speicherkatalysator (24) und einem zeitlich gefeuerten Magerbetriebsanteil ohne Schubphasen mit Lambda ≥ 1,15 innerhalb einer Zeitspanne von mindestens 250 s, insbesondere mindestens 350 s, eine HC-Emission von weniger als 0,07 g/km und eine NOₓ-Emission von weniger als 0,05 g/km aufweist.

4. Abgasanlage (10) nach einem der vorhergehenden Ansprüche, **gekennzeichnet durch** zumindest einen abgasenergiebetriebenen Ladeluftverdichter (32), der unter Absenkung einer Energie des den NOₓ-Speicherkatalysator (24) anströmenden Abgases eine Verdichtung einer der Verbrennungskraftmaschine (12) zuzuführenden Luft bewirkt.

5. Abgasanlage (10) nach Anspruch 4, **dadurch gekennzeichnet, dass** zumindest einer der Ladeluftverdichter (32) ein Abgasturbolader ist.

6. Abgasanlage (10) nach Anspruch 4, **dadurch gekennzeichnet, dass** zumindest einer der Ladeluftverdichter (32) ein Comprex-Lader ist.

7. Abgasanlage (10) nach einem der Ansprüche 4 bis 6, **dadurch gekennzeichnet, dass** eine Abgaslauflänge (L) zwischen der Verbrennungskraftmaschine (12) und dem motornächsten NOₓ-Speicherkatalysator (24) in Abhängigkeit von einer dem Abgas durch den Ladeluftverdichter (32) entzogenen Energiemenge gewählt ist.

8. Abgasanlage (10) nach einem der Ansprüche 4 bis 7, **dadurch gekennzeichnet, dass** die Abgaslauflänge (L) zwischen einer Rotationsachse des Abgasturboladers und einer Anströmfläche des NOₓ-Speicherkatalysators (24) höchstens 300 mm, insbesondere höchstens 250 mm, vorzugsweise höchstens 200 mm, besonders bevorzugt höchstens 150 mm beträgt.

9. Abgasanlage (10) nach einem der vorhergehenden Ansprüche, **dadurch gekennzeichnet, dass** die Abgaslauflänge (L) zwischen einem Zylinderkopf der Verbrennungskraftmaschine (12) und der Anströmfläche des motornächsten NOₓ-Speicherkatalysator (24) höchstens 500 mm, insbesondere höchstens 400 mm, vorzugsweise höchstens 350 mm, besonders bevorzugt höchstens 300 mm beträgt.

10. Abgasanlage (10) nach einem der vorhergehenden Ansprüche, **dadurch gekennzeichnet, dass** die spezifische Leistung der Verbrennungskraftmaschine (12) mindestens 80, insbesondere mindestens 90, vorzugsweise mindestens 100 kW/l Motorhubvolumen beträgt.

11. Abgasanlage (10) nach einem der vorhergehenden Ansprüche, **dadurch gekennzeichnet, dass** der fahrzeuggewichtsspezifische Hubraum der Verbrennungskraftmaschine (12) höchstens 1,1, insbesondere höchstens 1,0, vorzugsweise höchstens 0,9 dm³/1000 kg Fahrzeugleergewicht beträgt.

12. Abgasanlage (10) nach einem der vorhergehenden Ansprüche, **dadurch gekennzeichnet, dass** eine Nenndrehzahl der Verbrennungskraftmaschine (12) höchstens 7000, insbesondere höchstens 6500, vorzugsweise höchstens 6000 min⁻¹ beträgt.

13. Abgasanlage (10) nach einem der vorhergehenden Ansprüche, **dadurch gekennzeichnet, dass** der NOₓ-Speicherkatalysator (24) eine Speichermaterialmasse pro Katalysator aufweist, die derart ausgelegt ist, dass dieser mit einer eingelagerten NO₂-Masse von 200 mg/l Katalysatorvolumen einen NOₓ-Speicherwirkungsgrad von höchstens 95 %, insbesondere höchstens 90 %, vorzugsweise höchstens 80 % aufweist.

14. Abgasanlage (10) nach einem der vorhergehenden Ansprüche, **dadurch gekennzeichnet, dass** der NOₓ-Speicherkatalysator (24) eine Speichermaterialmasse pro Katalysator aufweist, die derart ausgelegt ist, dass dieser mit einer eingelagerten NO₂-Masse von 500 mg/l Katalysatorvolumen einen NOₓ-Speicherwirkungsgrad von höchstens 80 %, insbesondere höchstens 70 % und mindestens 60 % aufweist.

15. Abgasanlage (10) nach einem der vorhergehenden Ansprüche, **dadurch gekennzeichnet, dass** der NOₓ-Speicherkatalysator (24) als Hauptspeicherkomponente Barium, Kalium, Caesium, Natrium und/oder Magnesium und/oder Verbindungen und/oder Salze von diesen aufweist.

16. Abgasanlage (10) nach Anspruch 15, **dadurch gekennzeichnet, dass** der NOₓ-Speicherkatalysator (24) ein NOₓ-Speichertemperaturfenster mit einer oberen Grenze von mindestens 550 °C, insbesondere mindestens 580 °C, vorzugsweise mindestens 610 °C, besonders bevorzugt mindestens 640 °C aufweist.

17. Abgasanlage (10) nach einem der vorhergehenden Ansprüche, **dadurch gekennzeichnet, dass** der NOₓ-Speicherkatalysator (24) einen Edelmetallgehalt von höchstens 3,59 g/dm³ (100 g/ft³), insbesondere höchstens 2,87 g/dm³ (80 g/ft³) aufweist.

18. Verfahren zur Behandlung eines Abgases einer direkteinspritzenden, fremdgezündeten und zumindest zeitweise magerbetriebenen Verbrennungskraftmaschine (12), die einen fahrzeuggewichtsspezifischen Hubraum von höchstens 1,2 dm³ pro 1000 kg Fahrzeugleergewicht und eine spezifische Leistung von mindestens 70 kW pro Liter Motorhubvolumen aufweist, wobei das Abgas durch mindestens einen in einem Abgasstrang (22) der Verbrennungskraftmaschine (12) als ein motornächster Katalysator angeordneten NOₓ-Speicherkatalysator (24) geführt wird und wobei die Verbrennungskraftmaschine (12) in einem Lastbereich bis zu einem effektiven Mitteldruck (pₘₑ) von höchstens 2 bar und/oder einer Motordrehzahl (n_{Mot}) von höchstens 2000 min⁻¹ mit einem mageren Luft-Kraftstoffgemisch mit Lambda > 1 betrieben wird.

19. Verfahren nach Anspruch 18, **dadurch gekennzeichnet, dass** die Verbrennungskraftmaschine (12) in einem Lastbereich bis zu einem effektiven Mitteldruck (pₘₑ) von höchstens 1,5, insbesondere 1,2 bar und/oder einer Motordrehzahl (n_{Mot}) von höchstens 1600, insbesondere 1200 min⁻¹ mit einem mageren Luft-Kraftstoffgemisch mit Lambda > 1 betrieben wird.

20. Verfahren nach Anspruch 1 oder 2, **dadurch gekennzeichnet, dass** die Verbrennungskraftmaschine (12) in einem Lastbereich von höchstens bis zu einem effektiven Mitteldruck (pₘₑ) des 0,25-Fachen eines maximalen Mitteldrucks (p_{me,max}) und/oder bis zu einer Motordrehzahl (n_{Mot}) des 0,3-Fachen einer Nenndrehzahl (n_{Nenn}) mit einem mageren Luft-Kraftstoffgemisch mit Lambda > 1 betrieben wird.

21. Verfahren nach Anspruch 20, **dadurch gekennzeichnet, dass** die Verbrennungskraftmaschine (12) in einem Lastbereich von höchstens bis zu einem effektiven Mitteldruck (pₘₑ) des 0,15-Fachen eines maximalen Mitteldrucks (p_{me,max}) und/oder bis zu einer Motordrehzahl (n_{Mot}) des 0,2-Fachen einer Nenndrehzahl (n_{Nenn}) mit einem mageren Luft-Kraftstoffgemisch mit Lambda > 1 betrieben wird.

22. Verfahren nach Anspruch 18 bis 21, **dadurch gekennzeichnet, dass** das Abgas durch einen NOₓ-Speicherkatalysator (24) mit einer Speichermaterialmasse pro Katalysator geführt wird, die derart ausgelegt ist, dass dieser mit einer eingelagerten NO₂-Masse von 200 mg/l Katalysatorvolumen einen NOₓ-Speicherwirkungsgrad von höchstens 95 %, insbesondere höchstens 90 %, vorzugsweise höchstens 80 % aufweist.

23. Verfahren nach einem der Ansprüche 18 bis 22, **dadurch gekennzeichnet, dass** das Abgas durch einen NOₓ-Speicherkatalysator (24) mit einer Speichermaterialmasse pro Katalysator geführt wird, die derart ausgelegt ist, dass dieser mit einer eingelagerten NO₂-Masse von 500 mg/l Katalysatorvolumen einen NOₓ-Speicherwirkungsgrad von höchstens 80 %, insbesondere höchstens 70 % und mindestens 60 % aufweist.

24. Verfahren nach einem der Ansprüche 18 bis 23, **dadurch gekennzeichnet, dass** das Abgas durch einen NOₓ-Speicherkatalysator (24) geführt wird, der als Hauptspeicherkomponente Barium, Kalium, Caesium, Natrium und/oder Magnesium und/oder Verbindungen und/oder Salze von diesen aufweist.
